# EUROPEAN PATENT SPECIFICATION

(11) **EP 2 489 537 B1**
(45) Date of publication and mention of the grant of the patent: **22.05.2013**
(21) Application number: 12155081.8
(22) Date of filing: 13.02.2012
(51) Int. Cl.: B60K 11/04, B60K 11/08, B62D 35/02, B60Q 1/00, B60Q 1/04, B60Q 1/20, B60Q 1/18

(54) **Front part of a vehicle body**
Vorderteil einer Fahrzeugkarosserie
Partie avant d'une carrosserie de véhicule

(30) Priority: 21.02.2011 JP 2011035015
(43) Date of publication of application: 22.08.2012
(73) Proprietor: Honda Motor Co., Ltd., Tokyo 107-8556 (JP)
(72) Inventor: Ichikawa, Tomoaki c/o Honda R&D Co., Ltd., Saitama, 351-0193 (JP); Masuta, Noriaki c/o Honda R&D Co., Ltd., Saitama, 351-0193 (JP)
(74) Representative: Trossin, Hans-Jürgen

(56) References cited:
- DE-A1- 10 159 783
- DE-A1-102006 014 443
- FR-A1- 2 575 126
- US-B2- 6 719 359

## Description

### TECHNICAL FIELD

The present invention relates to a front part of a vehicle body, and in particular to a front part of a vehicle body provided with an onboard equipment such as an intercooler that is required to be cooled by outside air.

### BACKGROUND OF THE INVENTION

A motor vehicle equipped with a turbocharger or a supercharger is typically provided with an intercooler for cooling the engine intake with outside air. The turbocharger is usually placed in an engine room in a front part of the vehicle body so that the outside air introduced from an opening of a bumper face is conducted to an air entrance of the intercooler via an air duct.

JP2010-143359A discloses an air duct arrangement configured to conduct outside air introduced from an opening of a bumper face to the front brake. However, such a structure is found to be unsatisfactory when applied to the cooling of an intercooler because the cooling air that has passed through the intercooler is irregularly dispersed around the intercooler as the air leaves the intercooler, and this prevents the cooling efficiency of the intercooler to be improved as desired.

The amount of air flow that passes through the intercooler depends on the pressure difference that develops between the air entrance and the air exit of the intercooler. The study conducted by the inventors has revealed that the pressure at the air exit end of the intercooler is at a slight positive pressure level or at most at the atmospheric pressure level according to the conventional arrangement, and this limited the cooling efficiency of the intercooler.

DE 10 2006 014 443 A1, on which the preamble of claim 1 is based, proposes an under cover opening located upstream the planar strake.

### BRIEF SUMMARY OF THE INVENTION

In view of such problems of the prior art and the discovery made by the inventors, a primary object of the present invention is to provide a front structure of a vehicle body that can favorably supply outside air to an onboard equipment placed in the engine room of the vehicle and required to be cooled.

A second object of the present invention is to provide a front part of a vehicle body that can create a negative pressure region behind an onboard equipment placed in the engine room of the vehicle so that cooling air can be favorably passed through the onboard equipment.

According to the present invention, such objects can be accomplished by providing a front part of a vehicle body in accordance with claim 1.
The front part comprises : a front wheel house member; a front bumper face disposed ahead of the front wheel house member and formed with a bumper face opening passed through the front bumper face in a fore and aft direction; an under cover plate member extending substantially horizontally between the front wheel house member and a lower part of the front bumper face; an onboard equipment located above the under cover plate member; an air duct extending from the bumper face opening to an air entrance of the onboard equipment; an air outlet provided in a part of the front wheel house member located above the under cover plate member; and a planar strake depending from a lower surface of the under cover plate member so as to obstruct an air flow along a lower surface of the under cover plate member.

According to this arrangement, the air that flows along the lower surface of the under cover plate member as the vehicle travels at any speed is obstructed by the strake, and is deflected downward. This creates a negative pressure region behind the strake. The negative pressure region extends to the interior of the front wheel house member, and then, via the air outlet to an air exit end of the onboard equipment such as an intercooler of a supercharger. Therefore, the air is allowed to smoothly exit the onboard equipment without being dispersed, and the cooling efficiency can be improved. Furthermore, the negative region contributes to the increase in the pressure difference between the air entrance and air exit of the onboard equipment, and the resulting increase in the air flow through the onboard equipment also improves the cooling efficiency.

According to the present invention, a space is defined between a lower face of the air duct and an upper face of the under cover plate member, a part of the under cover plate member located behind the strake is formed with an under cover opening passed therethrough, and a lower wall of the air duct is formed with a duct opening that communicates the interior of the air duct with the space under the air duct.

The negative pressure created behind the strake is transmitted to the space defined between the lower face of the air duct and the upper face of the under cover plate member. The negative pressure prevailing under the air duct draws air from the air duct via the duct opening so that the air flowing through the air duct is accelerated on account of the ejector effect caused by the drawing of the air from the duct opening.

According to a certain aspect of the present invention, a lighting fixture such as a fog lamp is provided inside the air duct, and the duct opening is formed adjacent to the lighting fixture so as to provide an access to the lighting fixture from under the air duct.

The bumper face opening is thus used both for admitting air into the air duct and exposing the lighting fixture, instead of providing two separate openings for these purposes. Therefore, the opening area for admitting air into the air duct is increased owing to the absence of the separating wall which otherwise would be present between the two separate openings. Furthermore, in this case, the duct opening may serve the additional function of providing an access to the lighting fixture for such purposes as replacing the bulb of the lighting fixture.

If the duct opening is provided with a peripheral axial flange, the peripheral edge of the duct opening is prevented from hurting the hand of a worker who tries to reach the lighting fixture via the duct opening. If the axial flange is directed downward, the flange improves the aerodynamic properties of this arrangement, and enhances the ejector effect.

### BRIEF DESCRIPTION OF THE DRAWINGS

Now the present invention is described in the following with reference to the appended drawings, in which:
Figure 1 is a fragmentary perspective front view of a front part of a vehicle body embodying the present invention;
Figure 2 is a fragmentary, partly broken away perspective view of an essential part of the front part of the vehicle body;
Figure 3 is a fragmentary perspective bottom view of an essential part of the front part of the vehicle body;
Figure 4 is a fragmentary perspective view of an essential part of the front part of the vehicle body;
Figure 5 is a bottom view of an essential part of the front part of the vehicle body;
Figure 6 is a fragmentary perspective view of an intercooler installed in the front part of the vehicle body;
Figure 7 is a sectional view taken along line VII-VII of Figure 1; and
Figure 8 is a sectional view taken along line VIII-VIII of Figure 1.

### DETAILED DESCRIPTION OF THE PREFERRED EMBODIMENTS

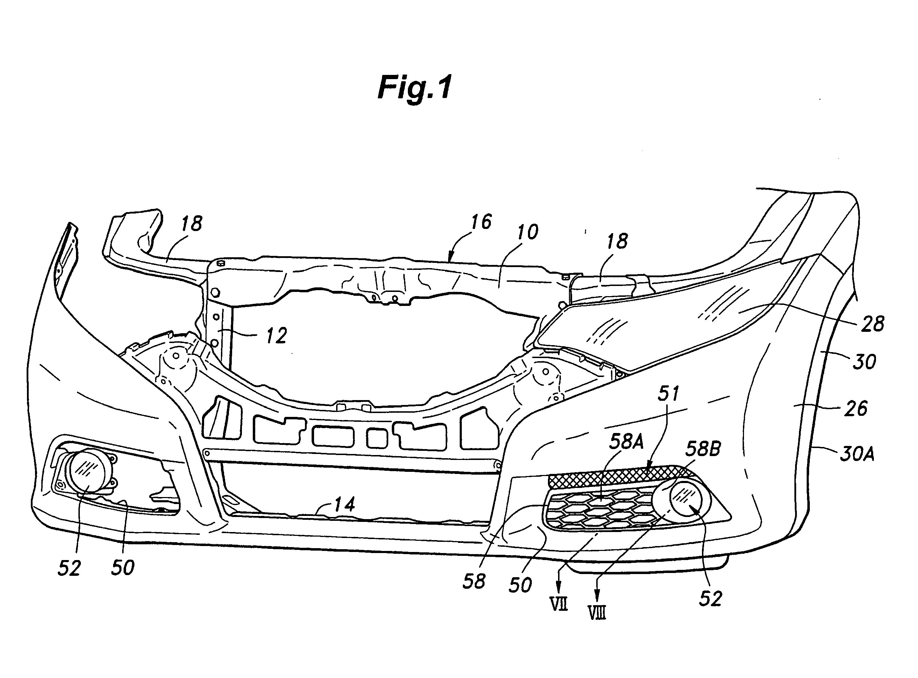

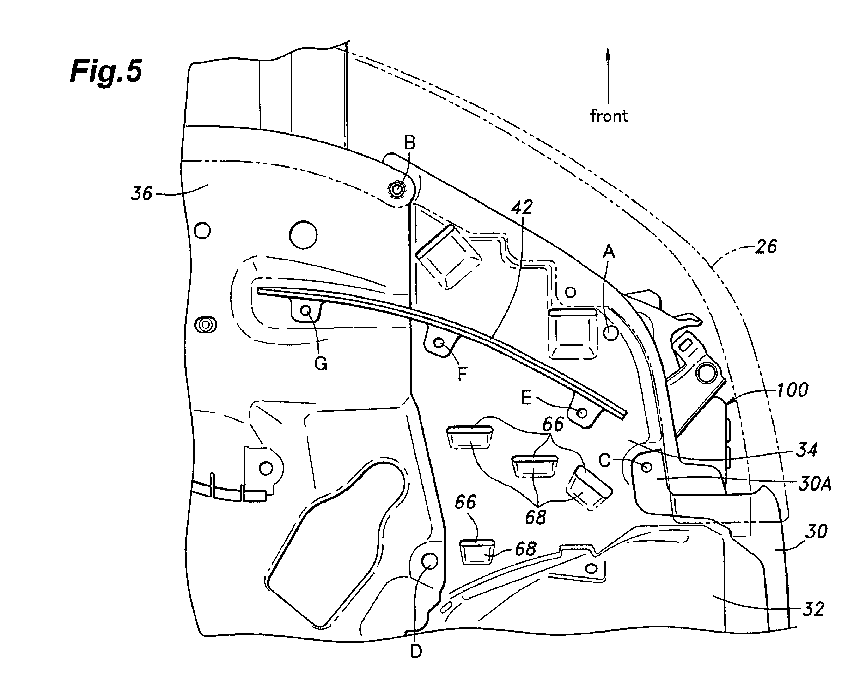

A front part of a vehicle body embodying the present invention is described in the following with reference to Figures 1 to 8. This vehicle is powered by an internal combustion engine fitted with a supercharger or a turbocharger (which will be collectively referred to as "supercharger" in the following description). The supercharger is typically equipped with an intercooler for cooling the intake of the engine which is compressed and thereby heated by the supercharger. In the illustrated embodiment, an air-cooled intercooler 100 is placed in a front part of an engine room so as to be cooled by the outside air coming into the engine room.

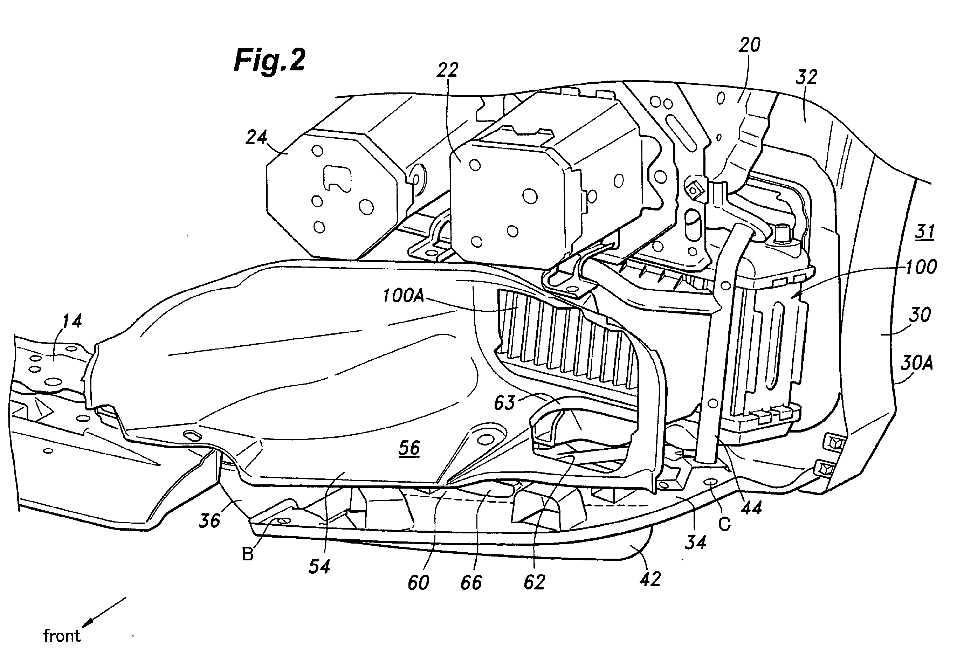

Referring to Figures 1 and 2, the front part of the vehicle body of the illustrated embodiment is defined by a frame structure formed by welding stamp-formed steel members. The frame structure includes a centrally located rectangular bulkhead assembly 16 consisting of a bulkhead upper frame 10 and a bulkhead lower cross member 14 extending laterally in an upper and lower front part of the vehicle body, respectively, and a pair of bulkhead side stays 12 extending vertically between the corresponding side ends of the bulkhead upper frame 10 and the bulkhead lower cross member 14, respectively. The two lateral ends of the bulkhead upper frame 10 are connected to front side frames (not shown in the drawings) via a pair of bulkhead upper sider frames 18, and the bulkhead side stays 12 are connected to wheel house upper member lowers 20 which are also connected to the front side frames. An outer bumper beam extension 22 is attached to a front end of each wheel house upper member lower 20, and an inner bumper beam extension 24 is attached to the front end of each front side frame not shown in the drawings.

The outer bumper beam extensions 22 and the inner bumper beam extensions 24 support a laterally extending front bumper beam (not shown in the drawings) made of a steel member. The front bumper beam is covered by a front bumper face 26 made of elastomeric material. In Figure 1, numeral 28 denotes a front head light placed immediately above each side end part of the bumper face 26.

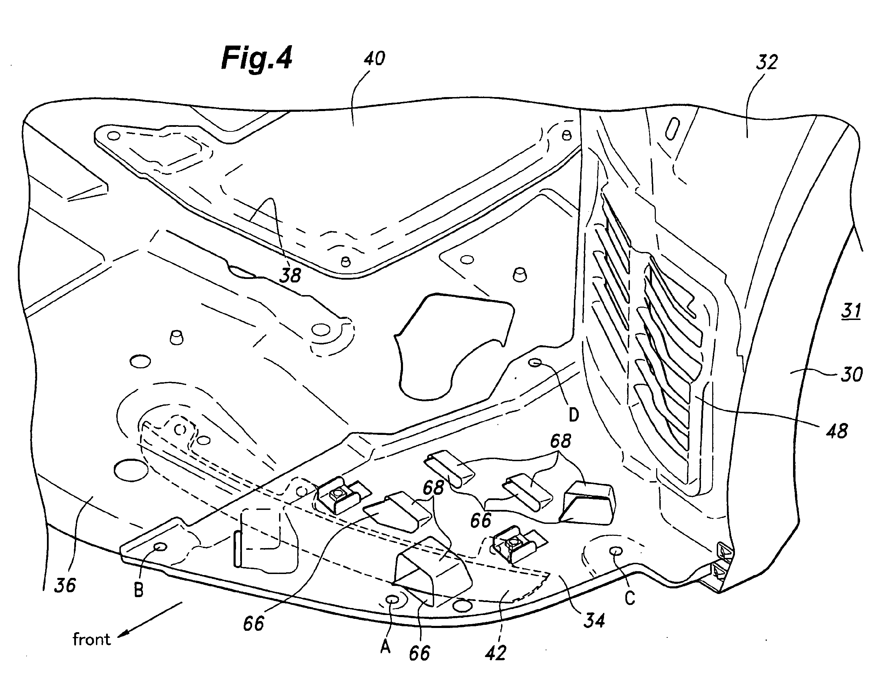

The frame structure further includes a front wheel arch protector 30 which is attached to a front pillar lower member (not shown in the drawings) on each side of the vehicle body, and includes a curved section 30A (a front lower extension thereof) defining an outboard periphery of a front wheel house 31 (See Figure 4).The front wheel arch protector 30 is also formed by stamp formed sheet steel.

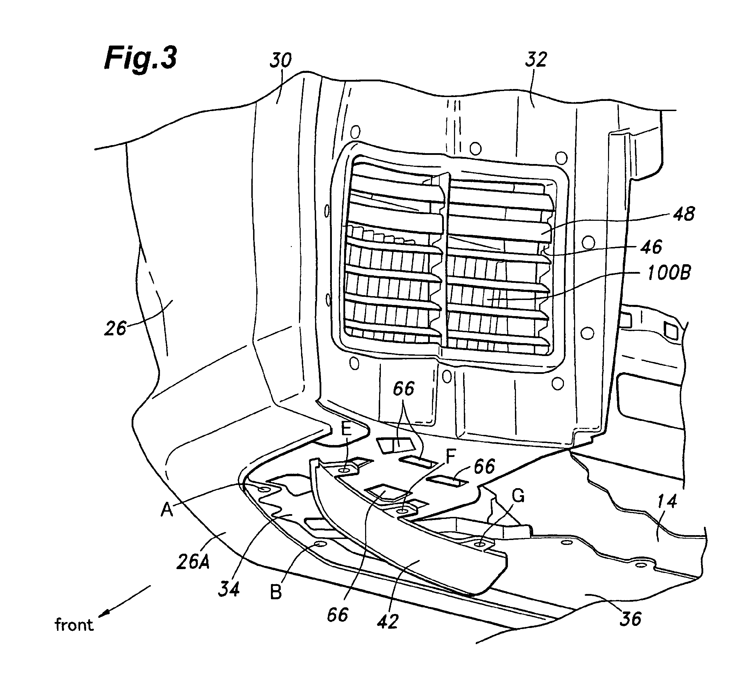

To the inboard side of the curved section 30A of the front wheel arch protector 30 is attached a front wheel house inner fender 32 made of plastic material defining a large part of the front end of the front wheel house 31. As shown in Figures 2 to 5, the front wheel house inner fender (front wheel house member) 32 is integrally formed with a side under cover 34 consisting of a plate member extending horizontally forward from a lower end of the front wheel house inner fender 32. A front edge of the side under cover 34 is fixedly attached to a bottom piece 26A (See Figure 3) of the front bumper face 26 by using a pair of fastening screws (not shown in the drawings) at points A and B in a detachable manner. An outboard part (indicated by C) of the side under cover 34 adjacent to the front wheel house inner fender 32 is detachably secured to the curved section 30A of the front wheel arch protector 30 by using clips (not shown in the drawings). An inboard part (indicated by D) of the side under cover 34 adjacent to the front wheel house inner fender 32 is detachably secured to a center under cover 36 (which will be described hereinafter) by using a clip (not shown in the drawings).

As discussed above, each front wheel house inner fender 32 is integrally provided with the corresponding side under cover 34 extending horizontally forward therefrom. The outboard edge of each side under cover 34 is curved so as to conform to the rounded corner of the corresponding lateral end of the front part of the vehicle body. A center under cover 36 extends horizontally along the bottom end of the front part of the vehicle body, and two side edges thereof are connected to the corresponding inboard edges of the side under covers 34, respectively. The center under cover 36 is provided with a maintenance opening 38 which is normally closed by a lid 40.

The side under covers 34 and the center under cover 36 jointly form an under cover that closes the bottom end of the front part of the engine room. In the illustrated embodiment, the side under covers 34 and the center under cover 36 are made of plastic plate members.

A strake 42 having a generally uniform vertical dimension is mounted on the lower surface of each side under cover 34 (at points E and F) and the center under cover 36 (at point G) by using screws. The strake 43 extends linearly in the vertical direction, and is slightly curved and slanted in plan view such that one end thereof located on the center under cover 36 is more forward than the other end thereof located on the outboard side under cover 34. In particular, the strake 42 presents a convex surface to the front, and a concave surface to the rear. The strake 43 may be made of a plastic or metallic plate member, and the surrounding air strikes the front surface of the strake 42 when the vehicle travels at a high speed.

The strake 42 directs the oncoming air to either side (or to the left side) and downward, and thereby blocks the air from striking the front tire. By thus directing the air flow away from the front tires, the air resistance caused by the oncoming air striking the tires can be reduced. Owing to the presence of the strake 42, a negative pressure region is created behind the strake 42 and the interior of the front wheel house inner fender 32 (inside the wheel house 31).

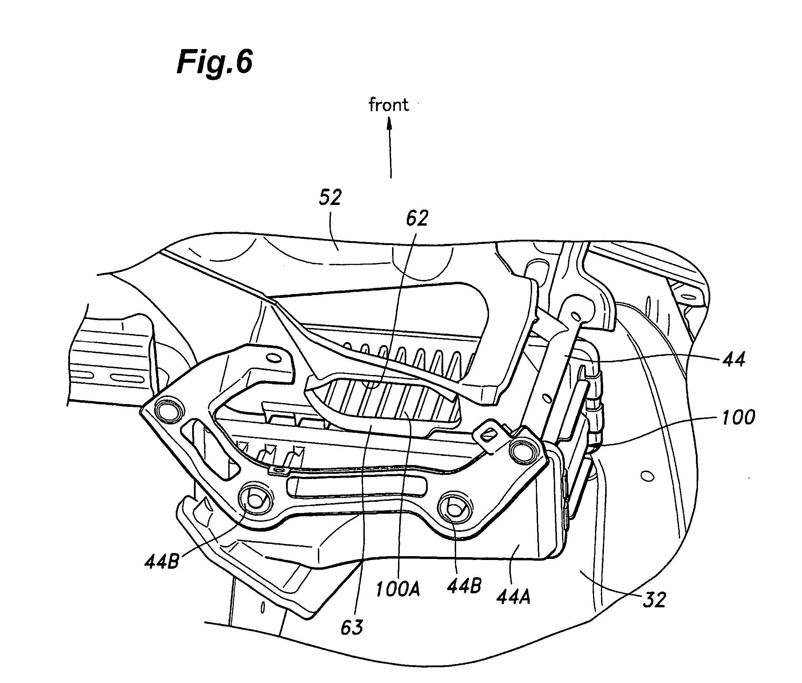

As shown in Figures 2, 7 and 8, an intercooler 100 is suspended from the wheel house upper member lower 20 via a mount bracket 44 forming a frame immediately ahead of the left front wheel house inner fender 32. As shown in Figure 6, the intercooler 100 is placed on a bottom member 44A of the mount bracket 44 via rubber bushes (not shown in the drawings) fitted into holes 44B formed in the bottom member 44A so that the intercooler 100 may be insulated from the vibration of the vehicle body.

The intercooler 100 is located such that the air coming into the engine room from the front end of the vehicle body as the vehicle travels at some speed is directed onto the intercooler 100. The front end of the intercooler 100 serves as an air entrance 100A, and the rear end of the intercooler 100 serves as an air exit 100B.

As shown in Figures 2, 3, 7 and 8, a front part of the front wheel house inner fender 32 that directly opposes the intercooler 100 is provided with an air outlet 46. The air that has passed through the intercooler 100 and expelled from the air exit 100B is allowed to be expelled to into the front wheel house 31 via the air outlet 46 formed in the front wheel house inner fender 32. The front wheel house inner fender 32 is fitted with a protective grill 48 for preventing gravels kicked up by the tire from hitting the intercooler 100 via the air outlet 46.

As shown in Figure 1, a laterally elongated bumper face opening 50 is passed through in each lateral side part of the front bumper face 26. A fog lamp (auxiliary lamp) 52 is placed in an outboard part of each bumper face opening 50. The bulb 53 of the fog lamp 52 can be replaced by accessing the fog lamp 52 from the rear part thereof. A DRL (daytime running lamp) 51 is provided in an upper part of each bumper face opening 50.

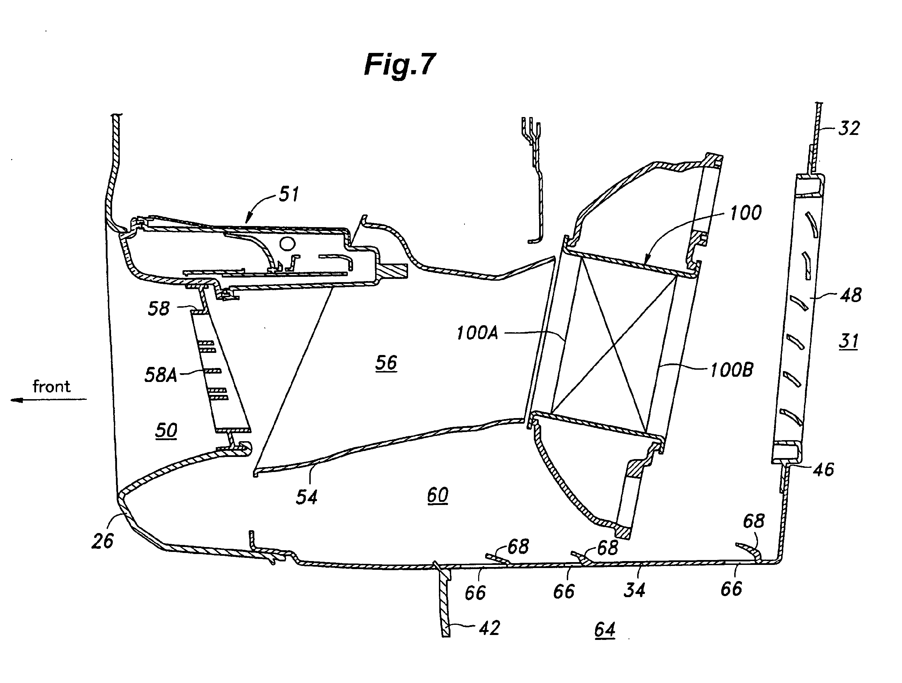

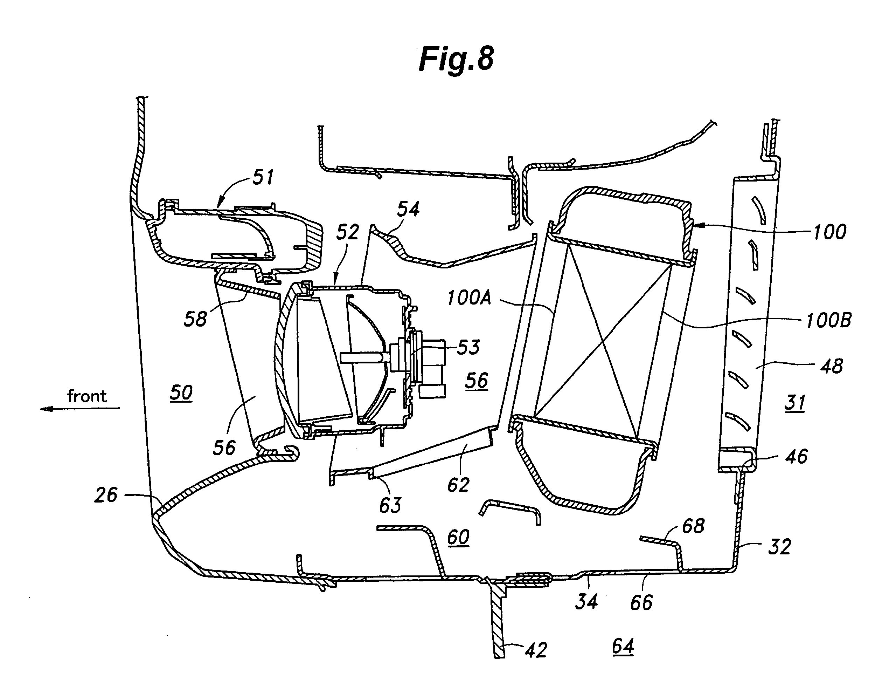

The left bumper face opening 50 includes a part that overlaps with the intercooler 100. As shown in Figures 7 and 8, an air duct 54 made of plastic material extends from the right bumper face opening 50 to the air entrance 100A of the intercooler 100, and defines an air passage 56 for efficiently conducting the air introduced into the bumper face opening 50 by the movement of the vehicle to the air entrance 100A of the intercooler 100.

The air duct 54 is generally located above the side under cover 34, and is attached to the mount bracket 44. The air duct 54 and the intercooler 100 are connected to each other by the mount bracket 44 so as to jointly form a single assembly. In the illustrated embodiment, the cross sectional area of the air duct 54 increases progressively from the inlet end to the exit end thereof.

The left fog lamp 52 is placed inside the air duct 54 or in the air passage 56. A garnish 58 is fitted into a front part of the bumper face opening 50 of the front bumper face 26, and includes a mesh part 58A for admitting outside air into the air duct 54 and an opening 58B for receiving or exposing the fog lamp 52.

As shown in Figure 8, a space 60 is defined between the lower wall of the air duct 54 and the upper surface of the side under cover 34, and a duct opening 62 is formed in a part of the bottom wall of the air duct 54 immediately under the fog lamp 52 to communicate the air passage 56 with the space 60 under the air duct 54. The duct opening 62 serves as a maintenance opening for replacing the bulb of the fog lamp 52. The periphery of the duct opening 62 is integrally formed with an axial flange 63 projecting downward.

A plurality of under cover openings 66 are passed through the side under cover 34 to communicate the space 60 under the air duct 54 with the space 64 under the under cover (side under cover 34). A wind collecting louver 68 is integrally formed along the rear edge of each under cover opening 66, and extends upward with some forward overhang.

According to this structure, when the vehicle is traveling, surrounding air is introduced into the air passage 56 of the air duct 54 from the left bumper face opening 50, and is directed to the entrance 100A of the intercooler 100. The air then passes through the intercooler 100 owing to a pressure difference created between the entrance 100A and the exit 100B of the intercooler 100 to thereby exchange heat with the intake air conducted inside the intercooler 100. The air leaving the exit 100B of the intercooler 100 is expelled to the rear of the front wheel house inner fender 32 or into the front wheel house 31 via the air outlet 46.

When the vehicle is traveling at a high speed, the air that passes under the strake 42 flows at a relatively high speed toward the rear of the vehicle body. This creates a negative pressure region that extends from the air outlet 46 to the exit 100B of the intercooler 100. This causes the air that has passed through the intercooler 100 to be drawn from the exit 100B of the intercooler 100 into the air output 46.

Owing to the presence of the air outlet 46 immediately behind the exit 100B of the intercooler 100 communicating with the outside of the engine room or the interior of the wheel house 31, the negative pressure created on the side of the exit 100B of the intercooler 100 converges the air exiting from the exit 100B of the intercooler 10 without dispersing the same so that the cooling efficiency of the intercooler 100 can be enhanced. Furthermore, the created negative pressure increases the pressure difference between the entrance 100A and the exit 100B of the intercooler 10, and this also contributes to the cooling efficiency of the intercooler 100 by increasing the air flow through the intercooler 100.

Owing to the increase in the cooling efficiency of the intercooler 100, the size of the intercooler 100 can be minimized.

As the air flow passes under the strake 42 to the rear part of the vehicle body, the air flow is accelerated, and creates a negative pressure region behind the strake 42. Therefore, the air in the space 60 under the air duct 54 is drawn out of the engine room or into the space 64 under the side under cover 34 (or a part thereof behind the strake 42), and this in turn causes the air in the air duct 54 to be drawn into the space 60 under the air duct 54. The axial flange of the duct opening 62 smoothes the air flow traveling from the duct opening 62 to the space 60 under the air duct 62, and thereby contributes to the increase in the amount of air that flows from the under cover openings 66 to the space 64 under the side under cover 34.

The resulting air flow that is directed from the duct opening 62 to the space 64 under the side under cover 34 causes an ejector action in the air duct 54 so that the amount of the air flow that flows in the air passage 56 of the air duct 54 to the air entrance 100A of the intercooler 100, thereby improving the cooling efficiency of the intercooler 100.

As the fog lamp 52 is placed inside the air duct 54, the opening area of the bumper face opening 50 can be increased as compared to the case where an opening for the fog lamp 52 is formed in the front bumper face 26 independently from the bumper face opening 50 for admitting air into the air duct 54. This also contributes to the increase in the amount of the air flow that is supplied to the intercooler 100, and the resulting improvement in the cooling performance of the intercooler 100. The absence of a wall that is otherwise required to separate the openings for the air admission and the placement of the fog lamp not only reduces the resistance to the admitted air but also improves the aesthetic aspect of the front part of the vehicle body.

Also, according to this arrangement, the bulb 53 of the fog lamp 52 can be relatively easily replaced by removing the fastening clips or screws from the four fastening points A, B, C and D and by elastically bending the side under cover 34 downward along the connecting line (bending line) with the wheel house inner fender 32. The space 60 under the air duct 54 is exposed from the lower side thereof so that a worker can reach the space 60 under the air duct 54 and the duct opening 62 from the lower side thereof, and grab the bulb 53 from behind the fog lamp 52.

Thus, the bulb 53 of the fog lamp 52 can be replaced without removing the front bumper face 26 or otherwise requiring major maintenance work. During the process of replacing the bulb 53 of the fog lamp 52, the axial flange 63 of the duct opening 62 guides the hand of the worker without causing any pain to the worker which an edge of the duct opening 62 could have caused if the axial flange 63 were absent.

Although the present invention has been described in terms of a preferred embodiment thereof, it is obvious to a person skilled in the art that various alterations and modifications are possible without departing from the scope of the present invention which is set forth in the appended claims.

In a front structure of a vehicle body, outside air is favorably supplied to an intercooler (100) placed in the engine room of the vehicle and required to be cooled. The outside air that flows along the lower surface of an under cover (34) as the vehicle travels at any speed is obstructed by a strake (42), and is deflected downward. This creates a negative pressure region behind the strake. The negative pressure region extends to the interior of a front wheel house inner fender (32), and then, via an air outlet (46) formed in the front wheel house inner fender to an air exit end of the intercooler. Therefore, the air is allowed to smoothly exit the intercooler without being dispersed, and the cooling efficiency can be improved.

## Claims

1. A front part of a vehicle body, comprising:
a front wheel house member (32);
a front bumper face (26) disposed ahead of the front wheel house member and formed with a bumper face opening (50) passed through the front bumper face in a fore and aft direction;
an under cover plate member (34) extending substantially horizontally between the front wheel house member and a lower part of the front bumper face;
an onboard equipment (100) located above the under cover plate member;
an air duct (54) extending from the bumper face opening to an air entrance of the onboard equipment;
an air outlet (46) provided in a part of the front wheel house member located above the under cover plate member; and
a planar strake (42) depending from a lower surface of the under cover plate member so as to obstruct an air flow along a lower surface of the under cover plate member;
**characterised in that** a space (60) is defined between a lower face of the air duct and an upper face of the under cover plate member, a part of the under cover plate member located behind the strake (42) is formed with an under cover opening (66) passed therethrough, and a lower wall of the air duct is formed with a duct opening (62) that communicates the interior of the air duct with the space under the air duct.

2. The front part of a vehicle according to claim 1,
wherein a lighting fixture (52) is provided inside the air duct, and the duct opening (62) is formed adjacent to the lighting fixture so as to provide an access to the lighting fixture from under the air duct.

3. The front part of a vehicle according to claim 2,
wherein the duct opening (62) is provided with a peripheral axial flange (63).

4. The front part of a vehicle according to claim 1,
wherein the onboard equipment comprises an intercooler (100) of a supercharger.

## Patentansprüche

1. Frontteil einer Fahrzeugkarosserie, umfassend:
ein Vorderradhauselement (32);
eine Frontstoßfängerfläche (26), die vor dem Vorderradhauselement angeordnet ist und mit einer Stoßfängerflächenöffnung (50) ausgebildet ist, die durch die Frontstoßfängerfläche in Vorne- und Hintenrichtung hindurchgeht;
ein unteres Abdeckplattenelement (34), dass sich im Wesentlichen horizontal zwischen dem Vorderradhauselement und einem unteren Teil der Frontstoßfängerfläche erstreckt;
ein bordeigenes Gerät (100), das über dem unteren Abdeckplattenelement angeordnet ist;
eine Luftführung (54), die sich von der Stoßfängerflächenöffnung zu einem Lufteinlass des bordeigenen Geräts erstreckt;
einen Luftauslass (46), der in einem Teil des Vorderradhauselements vorgesehen ist, das über dem unteren Abdeckplattenelement angeordnet ist; und
eine ebene Leiste (42), die von einer Unterseite des unteren Abdeckplattenelements abhängt, um einen Luftfluss entlang einer Unterseite des unteren Abdeckplattenelements zu beschränken;
**dadurch gekennzeichnet, dass** ein Zwischenraum (60) zwischen einer Unterseite der Luftführung und einer Oberseite des unteren Abdeckplattenelements definiert ist, wobei ein hinter der Leiste (42) angeordnetes Teil des unteren Plattenabdeckelements mit einer dort hindurchgehenden unteren Abdeckungsöffnung (66) ausgebildet ist, und eine untere Wand der Luftführung mit einer Führungsöffnung (62) ausgebildet ist, die den Innenraum der Luftführung mit dem Zwischenraum unter der Luftführung verbindet.

2. Das Frontteil eines Fahrzeugs nach Anspruch 1, worin eine Leuchteinrichtung (52) innerhalb der Luftführung vorgesehen ist, und die Führungsöffnung (62) benachbart der Leuchteinrichtung ausgebildet ist, um Zugang zur Leuchteinrichtung von unter der Luftführung vorzusehen.

3. Das Frontteil eines Fahrzeugs nach Anspruch 2, worin die Führungsöffnung (62) mit einem axialen Umfangsflansch (63) versehen ist.

4. Das Frontteil eines Fahrzeugs nach Anspruch 1, worin das bordeigene Gerät einen Zwischenkühler (100) eines Aufladers umfasst.

## Revendications

1. Partie avant d'une carrosserie de véhicule comprenant :
un élément de logement de roue avant (32) ;
une face de pare-chocs avant (26) disposée devant l'élément de logement de roue avant et formée avec une ouverture de face de pare-chocs (50) passant par la face de pare-chocs avant dans une direction longitudinale ;
un élément de plaque de sous-couvercle (34) s'étendant de manière sensiblement horizontale entre l'élément de logement de roue avant et une partie inférieure de la face de pare-chocs avant ;
un équipement embarqué (100) positionné au-dessus de l'élément de plaque de sous-couvercle ;
un conduit d'air (54) s'étendant à partir de l'ouverture de face de pare-chocs jusqu'à une entrée d'air de l'équipement embarqué ;
une sortie d'air (46) prévue dans une partie de l'élément de logement de roue avant positionnée au-dessus de l'élément de plaque de sous-couvercle ; et
un virure plane (42) dépendant d'une surface inférieure de l'élément de plaque de sous-couvercle afin d'obstruer un écoulement d'air le long d'une surface inférieure de l'élément de plaque de sous-couvercle ;
**caractérisée en ce qu'**un espace (60) est défini entre une face inférieure du conduit d'air et une face supérieure de l'élément de plaque de sous-couvercle, une partie de l'élément de plaque de sous-couvercle qui est positionnée derrière la virure (42) est formée avec une ouverture de sous-couvercle (66) traversée, et une paroi inférieure du conduit d'air est formée avec une ouverture de conduit (62) qui fait communiquer l'intérieur du conduit d'air avec l'espace situé sous le conduit d'air.

2. Partie avant d'un véhicule selon la revendication 1,
dans laquelle un appareil d'éclairage (52) est prévu à l'intérieur du conduit d'air, et l'ouverture de conduit (62) est formée de manière adjacente à l'appareil d'éclairage afin de fournir un accès à l'appareil d'éclairage à partir de la partie située sous le conduit d'air.

3. Partie avant d'un véhicule selon la revendication 2,
dans laquelle l'ouverture de conduit (62) est prévue avec une bride axiale périphérique (63).

4. Partie avant d'un véhicule selon la revendication 1,
dans laquelle l'équipement embarqué comprend un refroidisseur intermédiaire (100) d'un compresseur à piston.
